# EUROPÄISCHE PATENTSCHRIFT

(11) **EP 0 630 980 B1**
(45) Veröffentlichungstag und Bekanntmachung des Hinweises auf die Patenterteilung: **23.05.2001**
(21) Anmeldenummer: 94890105.3
(22) Anmeldetag: 15.06.1994
(51) Int. Cl.: C22B 1/242

(54) **Verfahren zum Herstellen von kaltgepressten eisenhältigen Briketts**
A method of producing cold-moulded iron-containing briquettes
Procédé pour la production de briquettes comprimées à froid et contenant du fer

(30) Priorität: 21.06.1993 AT 121293
(43) Veröffentlichungstag der Anmeldung: 28.12.1994
(73) Patentinhaber: VOEST-ALPINE INDUSTRIEANLAGENBAU GMBH, 4020 Linz (AT)
(72) Erfinder: Schrey, Günter, Dipl.-Ing. Dr., A-4040 Linz (AT); Tessmer, Gero, Ing., A-4020 Linz (AT); Katzensteiner, Karl, Ing., A-4050 Traun (AT); Kopper, Klaus, Dipl.-Ing., A-8700 Leoben (AT)
(74) Vertreter: Kopecky, Helmut, Dipl.-Ing.

(56) Entgegenhaltungen:
- DE-A- 3 519 415
- DE-A- 4 101 584
- DE-A- 4 123 626
- DE-C- 2 531 457
- DE-C- 3 727 576
- US-A- 4 585 475
- US-A- 5 100 464

## Beschreibung

Die Erfindung betrifft ein Verfahren zum Herstellen von kaltgepreßten eisenhältigen Briketts aus eisenhältigem Hüttenabfallstoff durch Mischen des Hüttenabfallstoffes mit einem aus einem oder mehreren Komponenten bestehenden Bindemittel und anschließendes Kaltpressen.

Es ist bekannt, Feinerz, Gichtstaub oder sonstige feinkörnige eisenhältige Stoffe für die Verhüttung zu agglomerieren. Hierbei hat sich das Brikettieren vielfach bewährt. Da in zunehmendem Maß die Verpflichtung besteht, zu deponierenden Abfall zu vermeiden, kommt in jüngerer Zeit dem Verwerten von eisenhältigen Nebenprodukten der Hüttenindustrie, insbesondere Hüttenabfallstoffen, immer größere Bedeutung zu, wobei man jedoch bestrebt ist, diese Hüttenabfallstoffe bzw. Hüttennebenprodukte in besonders kostengünstiger und umweltschonender Art und Weise der Produktion wiederum zuzuführen.

Als besonders kostengünstiges Verfahren hat sich das Kaltbrikettieren herausgestellt, jedoch gelingt es nicht ohne weiteres, durch Kaltbrikettieren Briketts mit ausreichender Festigkeit herzustellen, nämlich mit einer solchen Festigkeit, daß die Briketts auch in einem Schachtofen, wie einem Reduktionsofen oder Hochofen, eingesetzt werden können. Mit dem Problem der Herstellung von Briketts durch Kaltbrikettieren beschäftigt sich beispielsweise die DE-A-35 19 415 und die US-A - 5,100,464.

Zur Erzielung ausreichender Festigkeit wird dem zu verarbeitenden Material gemäß der DE-A - 35 19 415 ein Bindemittel beigefügt, das aus Zement oder granulierter Hochofenschlacke besteht. Hierbei ist es jedoch erforderlich, die Briketts einer Dampfhärtung und Nachtrocknung zu unterziehen, um eine genügende Aushärtung zu erreichen, wobei die Aushärtung zweckmäßig in einer Atmosphäre von Kohlendioxidgas und Wasserdampf erfolgt. Dieses Verfahren bedingt durch die thermische Nachbehandlung einen relativ hohen Aufwand.

Ein weiterer Nachteil dieser bekannter Kaltbrikettierverfahren für Hüttenabfallstoffe ist darin zu sehen, daß beim Einsatz in einen Reduktionsschachtofen oft nur eine unzureichende Reduktion erzielt werden kann. Bisher mußten Agglomerate, welche oxidisches Eisen in Form von Magnetit (Fe₃O₄) beinhalten, thermisch vorbehandelt werden, um das oxidische Eisen in Hämatit-Form (Fe₂O₃) überzuführen, da nur dieses direkt reduzierbar ist.

Aus der DE-A - 41 23 626 ist es bekannt, Hüttenreststoffe, wie Filterstäube, Zunder, Schleifstäube, mit Bindemittel zu mischen und zu agglomerieren, wobei die Agglomerate im oberen Möllerbereich eines Niederschacht-Schmelzaggregates im Gegenstromprinzip zu den aufsteigenden Reaktionsgasen getrocknet werden, so daß sie vorher nicht geröstet oder gesintert werden müssen. Die Festigkeit der Agglomerate ist zwar für Niederschachtöfen ausreichend; es können jedoch keine Agglomerate ausreichender mechanischer Festigkeit für Schachtöfen herkömmlicher Bauart hergestellt werden.

Aus der DE-C - 37 27 576 ist es bekannt, aus Hüttennebenprodukten, wie Gichtgasstaub, Walzsinter u.dgl., und Tonerdeschmelzzement und Wasser Platten zu formen (zu gießen), die hydraulisch erhärten, wobei ein grobkörniges Stützkorn zur besseren Einbindung des Zementes erforderlich ist. Die erhärteten Platten werden anschließend zu Stückmaterial gebrochen und erst dann in den Hochofen eingesetzt. Dieses Verfahren erfordert nicht nur spezielle Bindemittel, sondern ist auch aufwendig in der Durchführung.

Die Erfindung bezweckt die Vermeidung dieser Nachteile und Schwierigkeiten und stellt sich die Aufgabe, ein Verfahren der eingangs beschriebenen Art zu schaffen, das die Herstellung von reduktionsmittelfreien Briketts ermöglicht, die nicht nur eine hohe Festigkeit ohne thermische Vor- oder Nachbehandlung aufweisen, sondern zudem nahezu vollständig reduzierbar sind, wobei auch Mischungen von oxidischem Eisen in Form von Magnetit und in Form von Hämatit in einfacher Weise verarbeitbar sein sollen.

Diese Aufgabe wird erfindungsgemäß dadurch gelöst, daß magnetitischer Hüttenabfallstoff, wie Zunder, mit hämatitischem Feinstoff unter Bildung einer die einzelnen magnetitischen Teilchen einhüllenden, aus den hämatitischen Feinstoffen bestehenden Schicht gemischt wird und daß anschließend das Bindemittel zugemischt wird.

Erfindungsgemäß kommt der Umhüllung bzw. Ummantelung der magnetitischen Hüttenabfallstoffe durch hämatitische Feinstoffe eine besondere Bedeutung zu, da hierdurch die leichte und effiziente Direkt-Reduzierbarkeit erzielt wird. Dadurch, daß das Bindemittel erst nach Bildung der die magnetitischen Teilchen einhüllenden und aus den hämatitischen Feinstoffen bestehenden Schicht zugemischt wird, bleibt diese Ummantelung im wesentlichen erhalten, und es kann gleichzeitig zur guten Reduzierbarkeit eine ausreichende Festigkeit der Briketts sichergestellt werden. Die erfindungsgemäß hergestellten Briketts können in ein Reduktions-Schmelzaggregat eingebracht werden, ohne daß der Gehalt an Magnetit stört.

Vorzugsweise erfolgt das Mischen des magnetitischen Hüttenabfallstoffes mit hämatitischem Feinstoff unter Zumischen von Abwasser, insbesondere von ölhältigem Abwasser.

Zur Bildung einer ausreichenden Ummantelung bzw. die magnetitischen Teilchen einhüllenden Schicht weisen die hämatitischen Feinstoffe eine Korngröße zwischen 3,15 und 0,01 mm, vorzugsweise 0,5 und 0,02 mm, auf.

Vorteilhaft wird als Bindemittel Kalkhydrat oder Melasse verwendet.

Eine besonders hohe Festigkeit ist erzielbar, wenn Mischungen mit 0,5 bis 2 Gew.% Kalkhydrat, 2 bis 4 Gew.% Melasse, Rest magnetitischer Hüttenabfallstoff und hämatitische Feinstoffe eingesetzt werden.

Eine bevorzugte Variante des erfindungsgemäßen Verfahrens ist dadurch gekennzeichnet, daß Mischungen von 30 bis 90 Gew.% Zunder, 0,6 bis 0,9 Gew.% Kalkhydrat, 1 bis 5 Gew.% Melasse und einem Restanteil von Filter- und/oder Hallenstäuben eingesetzt werden.

Eine bevorzugte Variante ist dadurch gekennzeichnet, daß Mischungen aus ca. 36 Gew.% Zunder, ca. 57 Gew.% Feingut aus Eisenerz und/oder Eisenpellets, ca. 7 Gew.% Filter- und Hallenstäube und ca. 3 Gew.% Melasse (bezogen auf Zunder + Feingut + Stäube) eingesetzt werden.

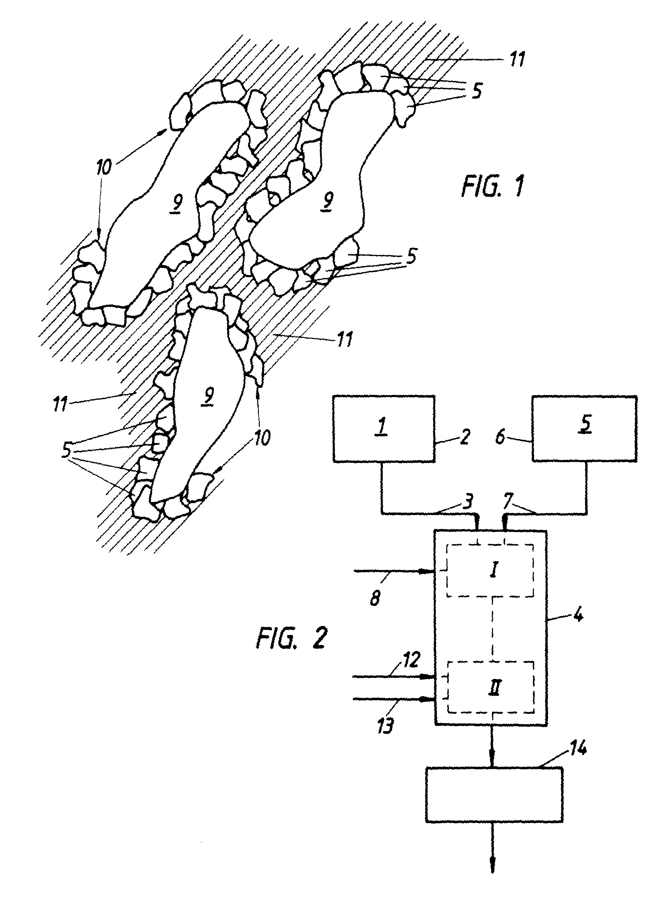

Die Erfindung ist nachfolgend anhand der Zeichnung näher erläutert, wobei Fig. 1 in schematischer Darstellung ein Detail eines Schnittes durch ein kaltgepreßtes Brikett in stark vergrößertem Maßstab im Ausschnitt zeigt. Fig. 2 gibt in Blockdiagrammform das erfindungsgemäße Verfahren in Form eines Beispieles wieder.

Der in einem eisen- und stahlerzeugenden Hüttenwerk anfallende Zunder 1 wird aus einem Vorratsbehälter 2 über eine Fördereinrichtung 3 einem Mischer 4 zugeführt. Gleichzeitig wird hämatitischer Feinstoff 5, wie Feinerzstaub, aus einem Vorratsbehälter 6 über eine Zuleitung 7 ebenfalls dem Mischer 4 zugeführt, in dem das Mischen des Zunders 1 mit dem hämatitischen Feinstoff 5 in einem ersten Mischvorgang I durchgeführt wird. Während dieses Mischvorganges I wird zusätzlich ölhältiges Abwasser über eine Zuleitung 8 zugemischt. Bei diesem Mischvorgang I kommt es zur Bildung einer die magnetitischen Zunderteilchen 9 einhüllenden und von den hämatitischen Feinstoffen 5 gebildeten Schicht 10.

Anschließend an diesen ersten Mischvorgang I erfolgt im selben Mischer 4 in einem zweiten Mischvorgang II das Zumischen von Bindemittel 11, welches vom Kalkhydrat und Melasse, die über eigene Zuleitungen 12, 13 zugeleitet werden, gebildet ist. Anschließend an das Zumischen des Bindemittels 11 wird das Gemisch aus dem Mischer 4 ausgebracht und einer Brikettieranlage 14 zugeführt. Zur Formung der Briketts können Anlagen verschiedener Konstruktionen eingesetzt werden, beispielsweise auch Strangpressen oder Kolben- oder Schneckenpressen sowie auch Doppelwalzenpressen, Stempelpressen etc. Das Brikettieren erfolgt kalt, wobei es von Bedeutung ist, daß die hergestellten Briketts keine thermische Nachbehandlung benötigen, so daß der gesamte Prozeß vom Zunder 1 bzw. hämatitischen Feinstoff 5 weg ohne jede thermische Behandlung durchgeführt werden kann.

Die nach dem erfindungsgemäßen Verfahren hergestellten Briketts sind, wie in Fig. 1 dargestellt, aufgebaut: magnetitische Zunderteilchen 9 sind von einer Schicht 10 bzw. von einer Ummantelung umgeben, die in erster Linie von hämatitischen Feinstoffen 5, also dem zugesetzten Feinerzstaub, gebildet ist. Diese Ummantelung bzw. einhüllende Schicht 10 wird während des Mischvorganges I gebildet. Durch das nachträgliche Zusetzen des Bindemittels 11 während des Mischvorganges II werden die ummantelten Zunderteilchen 9 aneinander gebunden und hierdurch Briketts sehr hoher Festigkeit gebildet.

Die Festigkeit (Grünfestigkeit) der erfindungsgemäß hergestellten Briketts liegt zwischen 1.700 und 1.900 N, wogegen sich bei gemäß dem Stand der Technik hergestellten Briketts lediglich Grünfestigkeiten, die unter 1.000 N liegen, erzielen lassen; die Grünfestigkeit von nach dem Stand der Technik hergestellten Briketts liegt in der Regel bei etwa 400 N. Ein wesentlicher Vorteil, der erfindungsgemäß noch zusätzlich erzielt wird, ist eine hohe Abriebfestigkeit (gemessen nach ISO-Norm-Othfresen Reduktionstest und nachfolgendem ISO-RDI-Drum-Test): Für Briketts mit einer Einsatz-Stückgröße zwischen 16 mm und 6,3 mm ergeben sich 89,0 % mit einer Stückgröße > 6,3 mm.

## Patentansprüche

1. Verfahren zum Herstellen von kaltgepreßten eisenhältigen Briketts aus eisenhältigem Hüttenabfallstoff (1, 5) durch Mischen des Hüttenabfallstoffes (1, 5) mit einem aus einer oder mehreren Komponenten gebildeten Bindemittel (11) und anschließendes Kaltpressen, dadurch gekennzeichnet, daß magnetitischer Hüttenabfallstoff, wie Zunder (1), mit hämatitischem Feinstoff (5) unter Bildung einer die einzelnen magnetitischen Teilchen (9) einhüllenden, aus den hämatitischen Feinstoffen (5) bestehenden Schicht (10) gemischt wird und daß anschließend das Bindemittel (11) zugemischt wird.

2. Verfahren nach Anspruch 1, dadurch gekennzeichnet, daß das Mischen des magnetitischen Hüttenabfallstoffes (1) mit hämatitischem Feinstoff (5) unter Zumischen von Abwasser erfolgt.

3. Verfahren nach Anspruch 1, dadurch gekennzeichnet, daß das Mischen des magnetitischen Hüttenabfallstoffes (1) mit hämatitischem Feinstoff (5) unter Zumischen von ölhältigem Abwasser erfolgt.

4. Verfahren nach einem der Ansprüche 1 bis 3, dadurch gekennzeichnet, daß die hämatitischen Feinstoffe (5) eine Korngröße zwischen 3,15 und 0,01 mm, vorzugsweise 0,5 und 0,02 mm, aufweisen.

5. Verfahren nach einem der Ansprüche 1 bis 4, dadurch gekennzeichnet, daß als Bindemittel (11) Kalkhydrat verwendet wird.

6. Verfahren nach einem der Ansprüche 1 bis 5, dadurch gekennzeichnet, daß als Bindemittel (11) Melasse verwendet wird.

7. Verfahren nach Anspruch 1, dadurch gekennzeichnet, daß Mischungen mit 0,5 bis 2 Gew.% Kalkhydrat, 2 bis 4 Gew.% Melasse, Rest magnetitischer Hüttenabfallstoff (1) und hämatitische Feinstoffe (5) eingesetzt werden.

8. Verfahren nach Anspruch 1, dadurch gekennzeichnet, daß Mischungen von 30 bis 90 Gew.% Zunder (1), 0,6 bis 0,9 Gew.% Kalkhydrat, 1 bis 5 Gew.% Melasse und einem Restanteil von Filter- und/oder Hallenstäuben eingesetzt werden.

9. Verfahren nach Anspruch 1, dadurch gekennzeichnet, daß Mischungen aus ca. 36 Gew.% Zunder (1), ca. 57 Gew.% Feingut aus Eisenerz und/oder Eisenpellets, ca. 7 Gew.% Filter- und Hallenstäube und ca. 3 Gew.% Melasse (bezogen auf Zunder + Feingut + Stäube) eingesetzt werden.

## Claims

1. A method of producing cold-moulded iron-containing briquettes from iron-containing metallurgical waste material (1, 5) by mixing the metallurgical waste material (1, 5) with a binder (11) formed from one or several components and subsequent cold-moulding, characterized in that magnetite metallurgical waste material such as scale (1) is mixed with hematite fine material (5) under formation of a layer (10) consisting of the hematite fine materials (5) and enveloping the individual magnetite particles (9) and that subsequently the binder (11) is admixed.

2. A method according to claim 1, characterized in that during mixing of the magnetite metallurgical waste material (1) with hematite fine material (5) waste water is admixed.

3. A method according to claim 1, characterized in that during mixing of the magnetite metallurgical waste material (1) with hematite fine material (5) oil-containing waste water is admixed.

4. A method according to one of claims 1 to 3, characterized in that the hematite fine materials (5) have a grain size between 3.15 and 0.01 mm, preferably 0.5 and 0.02 mm.

5. A method according to one of claims 1 to 4, characterized in that slaked lime is used as binder (11).

6. A method according to one of claims 1 to 5, characterized in that molasses are used as binder (11).

7. A method according to claim 1, characterized in that mixtures having 0.5 to 2 wt.% slaked lime, 2 to 4 wt.% molasses, the remainder being magnetite metallurgical waste material (1) and hematite fine materials (5), are used.

8. A method according to claim 1, characterized in that mixtures of 30 to 90 wt.% scale (1), 0.6 to 0.9 wt.% slaked lime, 1 to 5 wt.% molasses, and a remainder of filter dusts and/or manufacturing-shop dusts are used.

9. A method according to claim 1, characterized in that mixtures of about 36 wt.% scale (1), about 57 wt.% fine material from iron ore and/or iron pellets, about 7 wt.% filter dusts and manufacturing-shop dusts, and about 3 wt.% molasses (relative to scale + fine material + dusts) are used.

## Revendications

1. Procédé pour la production de briquettes contenant du fer et pressées à froid à partir de déchets de sidérurgie contenant du fer (1, 5) en mélangeant les déchets de sidérurgie (1, 5) avec un liant (11) constitué d'un ou de plusieurs composants, et par pressage successif à froid, caractérisé en ce que l'on mélange des déchets de sidérurgie à base de magnétite, comme de la calamine (1), avec des produits finis à base d'hématite (5) en formant une couche (10) qui enveloppe les particules individuelles de magnétite (9) et formée par les produits finis à base d'hématite, et en ce que l'on ajoute ensuite le liant (11) au mélange.

2. Procédé selon la revendication 1, caractérisé en ce que le mélange des déchets de sidérurgie à base de magnétite (1) avec les produits finis à base d'hématite (5) a lieu avec addition de rejets d'eau.

3. Procédé selon la revendication 1, caractérisé en ce que le mélange des déchets de sidérurgie à base de magnétite (1) avec les produits finis à base d'hématite (5) a lieu avec addition de rejets d'eau contenant de l'huile.

4. Procédé selon l'une des revendications 1 à 3, caractérisé en ce que les produits finis à base d'hématite (5) présentent une taille de grain comprise entre 3,15 et 0,01 mm, de préférence entre 0,5 et 0,02 mm.

5. Procédé selon l'une des revendications 1 à 4, caractérisé en ce que l'on utilise de l'hydrate de chaux à titre de liant (11)

6. Procédé selon l'une des revendications 1 à 5, caractérisé en ce que l'on utilise de la mélasse à titre de liant (11).

7. Procédé selon la revendication 1, caractérisé en ce que l'on emploie des mélanges comprenant de 0,5 à 2% en poids d'hydrate de chaux, 2 à 4% en poids de mélasse, le reste étant des déchets de sidérurgie à base de magnétite (1) et des produits finis à base d'hématite (5).

8. Procédé selon la revendication 1, caractérisé en ce que l'on emploie des mélanges comprenant de 30 à 90% de calamine (1), 0,6 à 0,9% en poids d'hydrate de chaux, 1 à 5% en poids de mélasse, et une proportion restante de poussières de filtrage et/ou de hangar.

9. Procédé selon la revendication 1, caractérisé en ce que l'on emploie des mélanges comprenant approximativement 36% en poids de calamine (1), environ 57% en poids de produits finis à partir de minerai de fer et/ou de pastilles de fer, environ 7% en poids de poussières de filtrage et de hangar, et environ 3% en poids de mélasse (rapporté au total calamine + produits finis + poussières).
